# EUROPEAN PATENT APPLICATION

(11) **EP 4 656 275 A1**
(43) Date of publication of application: **03.12.2025**
(21) Application number: 24770436.4
(22) Date of filing: 20.02.2024
(51) Int. Cl.: B01D 53/50, B01D 53/14, B01D 53/62, B01D 53/64, B01D 53/68, B01D 53/72, B01D 53/78, B01D 53/82, B01D 53/86, F23J 15/02, F23J 15/06

(54) **EXHAUST GAS PURIFICATION METHOD AND EXHAUST GAS PURIFICATION APPARATUS**

(30) Priority: 10.03.2023 JP 2023038171
(71) Applicant: Mitsubishi Heavy Industries, Ltd., Tokyo 100-8332 (JP)
(72) Inventor: NAGAI, Yoshinori, Tokyo 100-8332 (JP); YOSHIMURA, Hiroyuki, Tokyo 100-8332 (JP); URABE, Yu, Tokyo 100-8332 (JP)
(74) Representative: Studio Torta S.p.A.
(86) International application number: PCT/JP2024/006061
(87) International publication number: WO 2024/190323

(57) **Abstract**

An exhaust gas purification method includes: allowing exhaust gas containing at least one selected from the group consisting of soot dust, hydrogen chloride, nitrogen oxides, sulfur oxides, mercury, volatile organic compounds, and carbon oxides to pass through a catalyst bag filter which has at least one function selected from the group consisting of a denitration function, an NO oxidization function, an Hg⁰ oxidization function, a desulfurization function, and an adsorption function; bringing the exhaust gas after passing through the catalyst bag filter into direct contact with a cooling liquid to decrease a temperature of the exhaust gas; and bringing the exhaust gas after directly contacting the cooling liquid into direct contact with a CO₂ absorbent liquid to reduce carbon dioxide in the exhaust gas.

## Description

### TECHNICAL FIELD

The present disclosure relates to an exhaust gas purification method and an exhaust gas purification apparatus capable of removing harmful substances (nitrogen oxides (NOx), sulfur oxides (SOx), carbon oxides (COx), hydrogen chloride (HCl), heavy metals such as mercury (Hg⁰), volatile organic compounds (VOCs), dioxins (DXNs), soot dust, etc.) contained in exhaust gas.

The present application claims priority based on Japanese Patent Application No. 2023-038171 filed on March 10, 2023 with the Japanese Patent Office, the contents of which are incorporated herein by reference.

### BACKGROUND ART

Gas discharged from thermal power plants, waste incinerators, cement kilns, aluminum melting furnaces, boilers, or the like contain harmful substances such as nitrogen oxides, sulfur oxides, carbon dioxide, hydrogen chloride, heavy metals, dioxins, and volatile organic compounds. An increase in the density of such harmful substances in the atmosphere may have a negative effect on the global environment. Thus, various devices for removing harmful substances from exhaust gas are proposed, such as denitration devices, dust collection devices, desulfurization devices, dehydrochlorination devices, and CO₂ removal devices.

Known denitration devices include devices that use the ammonium catalytic reduction method. Known desulfurization devices include devices that use the wet lime plaster method, the alkaline solution absorption method or the lime slurry absorption method, the spray dry method, or the activated carbon adsorption method. Known CO₂ removal devices include devices (CO₂ absorption devices) that use absorption of carbon dioxide with a liquid containing an amine compound such as alkanolamine (hereinafter, also referred to as a CO₂ absorbent liquid).

Even after passing through a denitration device, a desulfurization device, or the like, exhaust gas still contains several ppm to several tens of ppm of carbon dioxide and several ppm to hundreds of ppm of sulfur dioxide, and furthermore, a small amount of nitrogen monoxide, a small amount of sulfur sesquioxide, a small amount of mercury, a small amount of dust, and a small amount of volatile organic compounds. If such exhaust gas is sent to a CO₂ absorption device directly for a CO₂ removal process, an amine compound contained in the CO₂ absorbent liquid alters due to nitrogen dioxide, sulfur sesquioxide, mercury, soot dust, or the like, and the CO₂ absorption performance of the CO₂ absorbent liquid deteriorates. To solve such a problem, several patent documents propose removing substances that alter amine compounds from exhaust gas immediately before the exhaust gas is supplied to a CO₂ absorption device by providing a CO₂ absorption pretreatment device such as an NOx scrubber, a device for spraying a dehydrochlorination and desulfurization agent, a wet type electric dust collector, before the CO₂ absorption device (Patent Document 1, Patent Document 2, Patent Document 3, Patent Document 4, and Patent Document 5).

### Citation List

### Patent Literature

Patent Document 1: WO2013/78211A1
Patent Document 2: JP2005-40683A
Patent Document 3: WO2012/14831A1
Patent Document 4: JP2015-85310A
Patent Document 5: WO2011/152550A1
Patent Document 6: JPH8-332349A
Patent Document 7: JPH8-196830A
Patent Document 8: JP2002-18241A
Patent Document 9: JP2006-7055A

### SUMMARY

### Problems to be Solved

Meanwhile, the above described CO₂ absorption pretreatment device requires high installation and operation costs, and removal of substances that alter amine compounds (Hg⁰, VOC, or the like in particular) is often insufficient.

An object of the present invention is to provide an exhaust gas purification method and an exhaust gas purification apparatus capable of extending the lifetime of a CO₂ absorbent liquid and removing harmful substances contained in exhaust gas (nitrogen dioxide, nitrogen monoxide, sulfur oxides, carbon dioxide, mercury, dioxin, volatile organic compounds, or the like) effectively and at low costs.

### Solution to the Problems

As a result of research conducted to achieve the above object, the present invention including the following embodiments was made.
(1) An exhaust gas purification method, comprising: allowing exhaust gas containing at least one selected from the group consisting of soot dust, hydrogen chloride, nitrogen oxides, sulfur oxides, mercury, volatile organic compounds, and carbon oxides to pass through a catalyst bag filter which has at least one function selected from the group consisting of a denitration function, an NO oxidization function, an Hg⁰ oxidization function, a desulfurization function, and an adsorption function; cooling the exhaust gas after passing through the catalyst bag filter to decrease a temperature of the exhaust gas; and bringing the exhaust gas after cooling into direct contact with a CO₂ absorbent liquid to reduce carbon dioxide in the exhaust gas.
(2) The exhaust gas purification method according to the above (1), wherein the exhaust gas is cooled through direct contact with a cooling liquid which is plain water, sea water, or an alkaline aqueous solution.
(3) The exhaust gas purification method according to the above (1) or (2), further comprising: before allowing the exhaust gas to pass through the catalyst bag filter, performing at least one process selected from the group consisting of a denitration process, a dust collection process, a desulfurization process and a dehydrochlorination process on the exhaust gas.
(4) The exhaust gas purification method according to any one of the above (1) to (3), wherein the CO₂ absorbent liquid is an aqueous solution containing an amine compound.
(5) The exhaust gas purification method according any one of the above (1) to (4), wherein the temperature of the exhaust gas immediately before passing through the catalyst bag filter is 80 to 250°C.
(6) The exhaust gas purification method according to any one of the above (1) to (5), wherein the temperature of the exhaust gas immediately before directly contacting the CO₂ absorbent liquid is 20 to 80°C.
(7) An exhaust gas purification apparatus, comprising: a catalyst bag filter which has at least one function selected from the group consisting of a denitration function, an NO oxidization function, an Hg⁰ oxidization function, a desulfurization function, and an adsorption function; a gas cooling device configured to be capable of cooling a gas to decrease a temperature of the gas; and a CO₂ absorption device configured to be capable of reducing carbon dioxide in the gas through direct contact between the gas and a CO₂ absorbent liquid, wherein the exhaust gas purification apparatus is configured such that the exhaust gas containing at least one selected from the group consisting of soot dust, hydrogen chloride, nitrogen oxides, sulfur oxides, mercury, volatile organic compounds, and carbon oxides is capable of passing through the catalyst bag filter, the gas cooling device, and the CO₂ absorption device in this order.
(8) The exhaust gas purification apparatus according the above (7), further comprising: a dehydrochlorination device configured to be capable of reducing hydrogen chloride in the gas, wherein the exhaust gas purification apparatus is configured such that the exhaust gas containing at least one selected from the group consisting of soot dust, hydrogen chloride, nitrogen oxides, sulfur oxides, mercury, volatile organic compounds, and carbon oxides is capable of passing through the dehydrochlorination device, the catalyst bag filter, the gas cooling device, and the CO₂ absorption device in this order.
(9) The exhaust gas purification apparatus according to the above (7), further comprising: a denitration device configured to be capable of reducing nitrogen oxides in the gas; a dust collection device configured to be capable of reducing soot dust in the gas; and a desulfurization device configured to be capable of reducing sulfur oxides in the gas, wherein the exhaust gas purification apparatus is configured such that the exhaust gas containing at least one selected from the group consisting of soot dust, hydrogen chloride, nitrogen oxides, sulfur oxides, mercury, volatile organic compounds, and carbon oxides is capable of passing through the denitration device, the dust collection device, the desulfurization device, the catalyst bag filter, the gas cooling device, and the CO₂ absorption device in this order.
(10) The exhaust gas purification apparatus according to the above (9), further comprising: a dehydrochlorination device configured to be capable of reducing hydrogen chloride in the gas, wherein the exhaust gas purification apparatus is configured such that the exhaust gas containing at least one selected from the group consisting of soot dust, hydrogen chloride, nitrogen oxides, sulfur oxides, mercury, volatile organic compounds, and carbon oxides is capable of passing through the denitration device, the dust collection device, the desulfurization device, the dehydrochlorination device, the catalyst bag filter, the gas cooling device, and the CO₂ absorption device in this order.

### Advantageous Effects

The exhaust gas purification method according to the present invention is capable of efficiently removing, from exhaust gas, harmful substances such as nitrogen dioxide, nitrogen monoxide, sulfur oxides, carbon dioxide, mercury, dioxin, volatile organic compounds, or the like. According to the exhaust gas purification method according to the present invention, substances that alter a CO₂ absorbent liquid are removed efficiently before the exhaust gas is brought into direct contact with the CO₂ absorbent liquid, and thus it is possible to suppress deterioration of the performance of the CO₂ absorbent liquid, and extend the lifetime of the CO₂ absorbent liquid. The exhaust gas purification apparatus according to the present invention is optimum for performing the exhaust gas purification method according to the present invention. The devices related to the catalyst bag filter require low installation and operation costs compared to typical CO₂ absorption pretreatment devices such as NOx scrubbers, devices for spraying a dehydrochlorination and desulfurization agent, wet-type electric dust collectors, etc.

### BRIEF DESCRIPTION OF DRAWINGS

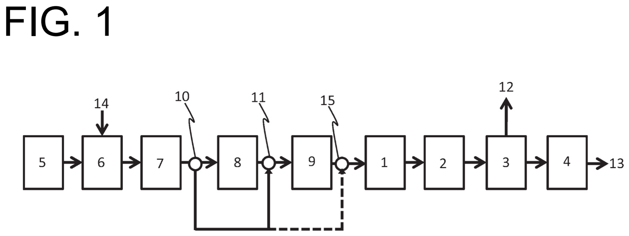

FIG. 1 is a diagram showing an example of apparatus configuration suitable for implementing the exhaust gas purification method of the present invention.

### DETAILED DESCRIPTION

An example of an embodiment of the method and the apparatus of the present invention will be described below. Nevertheless, the present invention is not limited to the described embodiment.

The exhaust gas purification method according to the present invention includes allowing exhaust gas to pass through a catalyst bag filter, cooling the exhaust gas having passed through the catalyst bag filter, and allowing the exhaust gas to directly contact a CO₂ absorbent liquid to reduce carbon dioxide in the exhaust gas. The exhaust gas purification method according to the present invention may further include, as needed, at least one process selected from the group consisting of a denitration process, a dust collection process, a desulfurization process and a dehydrochlorination process before allowing the exhaust gas to pass through the catalyst bag filter.

The exhaust gas purification apparatus according to the present invention includes a catalyst bag filter 1, a gas cooling device 2, and a CO₂ absorption device 3. The exhaust gas purification apparatus according to the present invention may further include, as needed, a denitration device 6, a dust collection device 7, a desulfurization device 8, or a dehydrochlorination device 9. The exhaust gas purification apparatus according to the present invention may further include, as needed, a CO₂ recovery device 4.

Exhaust gas that may be applied to the method or the apparatus of the present invention contains at least one selected from the group consisting of soot dust, hydrogen chloride, nitrogen oxides, sulfur oxides, mercury, volatile organic compounds, and carbon oxides. Furthermore, the exhaust gas may contain harmful substances such as dioxin, phosphorus oxide, and arsenic. Furthermore, the exhaust gas may contain urea, ammonium. or the like that is addable through a denitration process by the ammonium catalytic reduction method.

Exhaust gas which may be applied to the present invention may be a gas discharged from an exhaust gas source 5 which is a thermal power plant, a waste incinerator, a cement kiln, an aluminum melting furnace, a boiler, or the like.

The temperature of the exhaust gas immediately before passing through the catalyst bag filter is preferably 80 to 250°C, or more preferably, 100 to 200°C. Furthermore, the temperature of the exhaust gas immediately before directly contacting the CO₂ absorbent liquid is preferably 20 to 80°C, or more preferably, 30 to 65°C, or even more preferably, 40 to 50°C.

The catalyst bag filter used in the present invention has at least one function selected from the group consisting of a denitration function, an NO oxidization function, an Hg⁰ oxidization function, a desulfurization function, and an adsorption function. The catalyst bag filter is a bag filter configured to be capable of capturing particulate matter (soot, dust, etc.) (dust removing process) and to support a catalyst or a functional substance that is capable of adding various functions. Examples of the catalyst bag filter used in the present invention include those described in Patent Documents 6, 7, and 9.

While the configuration of the bag filter is not limited to the above example, the bag filter may include filter fabric including at least one base fabric including woven or nonwoven fabric and at least one felt layer that is laminated on one side or both sides of the base fabric. The base fabric or the felt layer may be formed of a fiber material including heat-resistant organic resin such as polyphenylene sulfide resin and polytetrafluoroethylene resin, or a heat-resistant inorganic fiber material such as glass fiber, carbon fiber, titania fiber (JP2002-113311A), etc.

The felt layer may be preferably disposed on the inflow side of exhaust gas. The felt layer may be suitable for collecting particulate matter that is submicron in size. Furthermore, the base fabric and/or the felt layer may function as a carrier that supports a catalyst or a functional substance.

The outer appearance and shape of the bag filter is not particularly limited. The bag filter may have a tubular shape, a tubular shape with a bottom, a bag shape, or the like, for instance. The bag filter having a tubular shape, a tubular shape with a bottom, or a bag shape may include filter fabric having a tubular shape, a tubular shape with a bottom, or a bag shape and a gauge (retainer) incorporated within the filter fabric, for instance. The bag filter has a function to collect dust soot, particulate matter (PM), or the like.

The catalyst bag filter used in the present invention has various other functions than the collecting function. For example, the various functions may include at least one function selected from the group consisting of a denitration function, an NO oxidization function, an Hg0 oxidization function, a desulfurization function, and an adsorption function. The denitration function includes an NOx reduction function such as an NO₂ reduction function and an NO reduction function.

The catalyst bag filter used in the present invention may include a precoat layer including lime hydrate. The precoat layer may be preferably disposed on the inflow side of exhaust gas. Lime hydrate contained in the precoat layer causes a neutralization reaction with an acid gas contained in exhaust gas, such as hydrogen chloride and SOx. Furthermore, the precoat layer is useful in collecting an unreacted acid gas or soot dust. The precoat layer may be formed on the base fabric and/or the felt layer by adding lime hydrate to the base fabric and/or the felt layer from the inflow side of exhaust gas.

The catalyst bag filter used in the present invention may include an adsorption layer that contains a powder body having a pore structure such as activated alumina (Al₂O₃), diatomite, activated clay, silica (SiO₂), and activated carbon. The adsorption layer may be preferably disposed at a position close to the inflow side of exhaust gas. The powder body having a pore structure is useful in adsorbing and removing chlorides, sulfur oxides, acid ammonium sulfate, VOC, dioxin, or the like that exhaust gas may contain. The adsorption performance may be improved by adding a simple substance such as zinc and sulfur, a metal halide such as zinc iodide and copper chloride, or the like to the power body having a pore structure. The adsorption layer may be formed by supporting a powder body having a pore structure on a gauge (retainer), the base fabric and/or the felt layer, or by interposing a powder body having a pore structure between the base fabric and/or the felt layer. Alternately, a bag filter having a tubular shape with a bottom may house a particulate matter having a pore structure such as activated alumina (Al₂O₃), diatomite, activated clay, silica (SiO₂), and activated carbon in the tube as the adsorption layer. Furthermore, the base fabric or the felt layer itself may be formed of fiber having a pore structure and used as the adsorption layer.

The catalyst bag filter used in the present invention may include a catalyst layer. The catalyst layer may be preferably disposed at a position farther from the inflow side of exhaust gas compared to the adsorption layer and the precoat layer in terms of control of deterioration of the catalyst. The denitration catalyst that may be used for the catalyst layer is useful in reducing nitrogen oxides (NOx) that may be contained in exhaust gas. Furthermore, a denitration catalyst and an NO oxidation catalyst may be used together. The NO oxidation catalyst may be useful in oxidizing NO into NO₂ and oxidizing a particulate matter (PM) with NO₂. While a denitration catalyst may have an Hg⁰ oxidization capability depending on the composition, the HG⁰ oxidation catalyst may be useful in oxidizing Hg⁰, contained in exhaust gas, which is difficult to remove, into a mercury compound (e.g., HgO, HgCl₂), which is easier to remove. A denitration catalyst, an Hg⁰ oxidation catalyst, and/or an NO oxidation catalyst may be used together in a freely-selected combination as the at least one catalyst layer. A denitration catalyst layer, an Hg⁰ oxidation catalyst layer, and/or an NO oxidation catalyst layer may be used in a freely-selected combination as separate catalyst layers. Several tens to several hundreds of ppm of hydrogen chloride that may be contained in exhaust gas may promote oxidization reaction of Hg⁰ (melting point is minus 38.83°C), and turning hydrogen chloride (boiling point is minus 85.09°C) into mercury II chloride (melting point is 277°C) may facilitate removal of hydrogen chloride with a filter or the like. Accordingly, it is possible to remove most of NOx, NO, and mercury contained in exhaust gas before passing through the catalyst bag filter just by allowing the same to pass through the catalyst bag filter.

The catalyst bag filter used in the present invention may include a dioxin decomposition catalyst layer. The dioxin decomposition catalyst is useful in decomposing and reducing dioxin that may be contained in exhaust gas. The dioxin decomposition catalyst layer may be provided separately from the catalyst layer, or the catalyst and the dioxin decomposition catalyst may be provided together in a freely-selected combination as the at least one catalyst layer.

Compositions and production methods of catalysts suitable for denitration, NO oxidization, Hg⁰ oxidization, or dioxin decomposition are known and thus not described here in detail. Compositions of catalysts suitable for denitration, NO oxidization, Hg⁰ oxidization, or dioxin decomposition includes, for instance, a composition including at least one base metal element selected from the group consisting of W, Mo, and V, a composition including precious metal such as Pt, Ru, Pd, and R, a composition including titanium oxide, silicon oxide, calcium sulfate, alumina, or the like, a composition including aluminosilicate, zeolite, or the like, and a composition of freely-selected combination of the above. The catalyst layer may be formed by supporting a catalyst as described above on the base fabric and/or the felt layer, or by interposing a catalyst as described above between the base fabric and/or the felt layer.

By housing the catalyst bag filter in a bag filter house having a gas inlet and a gas outlet and supplying exhaust gas from the gas inlet of the bag filter house, it is possible to facilitate flow of exhaust gas through the catalyst bag filter. The exhaust gas having passed through the catalyst bag filter is discharged from the bag filter house via the gas outlet. By optimizing the functions to be applied to the catalyst bag filter with a good balance, it is possible to reduce a plurality of harmful substances contained in exhaust gas immediately before the exhaust gas passes through the catalyst bag filter simultaneously and significantly as the exhaust gas passes through the catalyst bag filter. If soot, dust, particulate matter or the like accumulates on the catalyst bag filter and the pressure loss becomes greater than a predetermined value, it is possible to remove the accumulated substances by vibration, or reverse air cleaning using a pulse jet (see Patent Document 8, for instance).

Next, exhaust gas having passed through the catalyst bag filter is cooled and the temperature of the exhaust gas is decreased. Exhaust gas may be cooled through indirect contact with a refrigerant via a heat exchanger, or through direct contact with a cooling liquid. As a cooling liquid, plain water, sea water, alkaline aqueous solutions (aqueous solutions of a base such as NaOH, KOH, Ca(OH)₂), basic aqueous solutions of a reducing substance such as dithionite, thiosulfate, sulfite, bisulfite, iodide, etc.), or the like can be preferably used. Direct contact between exhaust gas and a cooling liquid may be performed through a gas-liquid contact operation that is known in the present technical field. Examples of a device related to the gas-liquid contact operation include for instance, a plate tower (plate column, tray tower, or tray column), a packed tower, a wetted-wall column, a spray tower, a scrubber, or the like. Among these, a spray tower is preferable. Through such cooling, the temperature of the exhaust gas is adjusted to a temperature suitable for CO₂ absorption, which is the next step. The cooling liquid after the gas-liquid contact operation may be cooled with a chiller or the like as needed, and the consumed base or reducing substance may be refilled as needed, to be used again in the direct contact with exhaust gas.

In a case where an alkaline aqueous solution is used as the cooling liquid, a base such as sodium hydrate and sulfur dioxide in the exhaust gas react and produce sulfite (e.g., SO₂+2NaOH→Na₂SO₃+H₂O). Sulfite and sulfur dioxide in the exhaust gas react and produce bisulfite (e.g., SO₂+Na₂SO₃+H₂O→2NaHSO₃). These reactions remove sulfur dioxide from the exhaust gas. At this time, the sulfite concentration of the alkaline aqueous solution increases from the reaction with sulfur dioxide in exhaust gas. However, pH of the alkaline aqueous solution decreases from the reaction between nitrogen dioxide and sulfur dioxide in the exhaust gas. The pH decrease of the alkaline aqueous solution, that is, the decrease in base reduces the reaction with sulfur dioxide, and thereby reduces production of sulfite or bisulfite. Thus, direct contact between an alkaline aqueous solution and exhaust gas reduces the sulfite concentration in total.

In a case where an aqueous solution of sulfite or bisulfite is used, sulfite ion and nitrogen dioxide in exhaust gas react and nitrogen dioxide is reduced to nitrogen or nitrogen oxide. This reaction removes nitrogen dioxide from the exhaust gas.

Next, cooled exhaust gas is brought into direct contact with a CO₂ absorbent liquid to reduce carbon dioxide in the exhaust gas. As a CO₂ absorbent liquid, an aqueous solution that contains an amine compound is preferably used. Examples of amine compounds include primary amines containing an alcoholic hydroxyl group such as monoethanolamine and 2-amino-2-methyl-1-propanol; secondary amines containing an alcoholic hydroxyl group such as diethanolamine and 2-methylaminoethanol; tertiary amines containing an alcoholic hydroxyl group such as triethanolamine and N-methyldiethanolamine; polyethylene polyamines such as ethylenediamine, triethylenediamine, and diethylenetriamine; cyclic amines such as piperazines, piperidines, and pyrrolidines; polyamines such as xylylenediamine; amino acids such as methylaminocarboxylic acid; and mixtures thereof. Furthermore, the CO₂ absorbent liquid may contain a carbon dioxide absorption promoter or a corrosion inhibitor, and further, another medium such as methanol, polyethylene glycol, and sulfolane.

Direct contact between exhaust gas and a CO₂ absorbent liquid may be performed through a gas-liquid contact operation known in the present technical field. Examples of a device related to the gas-liquid contact operation include, for instance, a plate tower (plate column, tray tower, or tray column), a packed tower, a wetted-wall column, a spray tower, a scrubber, or the like. Among these, a plate tower and a packed tower are preferable. Exhaust gas flows in from the bottom portion of the absorbent tower, moves up through the absorbent part, passes through the water washing part, and is discharged from the top portion of the absorbent tower as a purified gas 12. The CO₂ absorbent liquid is poured onto the upper portion of the absorbent part so as to be in countercurrent contact with exhaust gas at the absorbent part, absorbs carbon dioxide in the exhaust gas, and accumulates at the bottom portion of the absorbent tower.

The CO₂ absorbent liquid accumulated at the bottom portion of the absorbent tower has a high concentration of carbon dioxide. The CO₂ absorbent liquid is sent to a desorption tower, and carbon dioxide is desorbed from the CO₂ absorbent liquid through heating with steam or the like, and carbon dioxide 13 is discharged from the top portion of the desorption tower. The CO₂ absorbent liquid after desorption of carbon dioxide accumulates at the bottom portion of the desorption tower, is returned to the absorbent tower, and circulated and used to absorb carbon dioxide. Meanwhile, carbon dioxide 13 discharged from the top portion of the desorption tower may be treated in various ways in the next step. For instance, carbon dioxide may be stored under the ground or the ocean, or utilized in the enhanced oil recovery technique, welding, dry ice, synthesis of chemical products (oxygenated compounds (polycarbonate, urethane, or the like), commodity substances, etc.), synthesis of fuels (methanol, ethanol, methane, etc.), synthesis of carbonate, absorption to concrete products, absorption to sea weed, sea grass, microalgae (synthesis of biofuels), or the like.

In the present invention, the catalyst bag filter and a gas cooling device which uses cooling liquid direct contact efficiently removes harmful substances such as nitrogen dioxide, sulfur dioxide, mercury, etc. Exhaust gas that directly contacts the CO₂ absorbent liquid barely contains nitrogen dioxide, sulfur dioxide, or the like that causes deterioration of the carbon dioxide absorption performance of the CO₂ absorbent liquid. As a result, it is possible to suppress deterioration of the carbon dioxide absorption performance of the CO₂ absorbent liquid and extend the lifetime of the CO₂ absorbent liquid significantly. Furthermore, it is possible to decrease the frequency of downtime of the CO₂ absorption device for removing nitrate or the like from the CO₂ absorbent liquid (reclaimer), and thus it is possible to improve the economic efficiency.

In the present invention, a process that may be performed on the exhaust gas as needed before the exhaust gas passes through the catalyst bag filter is, for example, at least one process selected from the group consisting of a denitration process, a dust collection process, a desulfurization process and a dehydrochlorination process.

The denitration device (denitration process) reduces nitrogen oxides in the exhaust gas. The denitration process can be performed by allowing the exhaust gas to pass through the denitration device. While the denitration device is not particularly limited, a preferable example is an ammonium catalytic reduction denitration device that uses a catalyst composition including titanium oxide. Besides titanium oxides, the catalyst may include at least one element selected from the group consisting of W, Mo, and V, calcium sulfate, silica, or the like. The catalyst to be disposed in the denitration device may be, for example, a catalyst formed by shaping a catalyst composition into a honeycomb shape, a column shape, a cylindrical shape, or the like, or a catalyst formed by adhering a catalyst composition to a metal plate such as a metal lath or a piece of mesh woven fabric of ceramic or glass and shaping the same into a corrugated plate shape. In the present invention, a catalyst formed into a corrugated plate shape is preferably used.

The dust collection device (dust collection process) reduces soot dust (combustion ash, particulate matter, etc.), in the exhaust gas. The dust collection process can be performed by allowing the exhaust gas to pass through the dust removing device. The dust removing device used in the present invention is not particularly limited. For instance, an electric dust collector, a bag filter device, or the like may be used.

The desulfurization device (desulfurization process) reduces sulfur oxides in the exhaust gas. The desulfurization process can be performed by allowing the exhaust gas to pass through the desulfurization device. While the desulfurization device used in the present invention is not particularly limited, a device using the wet lime plaster method or the magnesium hydrate method is preferable.

The dehydrochlorination device (dehydrochlorination process) reduces acidic substances such as hydrogen chloride and sulfur oxides in the exhaust gas. The dehydrochlorination process can be performed by allowing the exhaust gas to pass through the dehydrochlorination device. While the dehydrochlorination device used in the present invention is not particularly limited, the dehydrochlorination device is a device capable of bringing exhaust gas and a dehydrochlorination and desulfurization agent into direct contact. As a dehydrochlorination and desulfurization agent, for instance, alkaline aqueous solutions such as a sodium hydrogencarbonate (soda) aqueous solution and a slaked lime aqueous solution may be used. It is possible to adjust the temperature of the exhaust gas immediately before passing through the dehydrochlorination device with a gas temperature adjustment device. As the gas temperature adjustment device, for instance, a heat exchanger or a heater may be used. As the medium of the heat exchanger 11 for adjusting the temperature of the exhaust gas immediately before passing through the dehydrochlorination device (for supplying heat to the exhaust gas), a medium discharged from the heat exchanger 10 for adjusting the temperature of the exhaust gas immediately before passing through the desulfurization device (for recovering heat from exhaust gas) may be used. The medium that transferred heat to the exhaust gas in the heat exchanger 11 may be returned to the heat exchanger 10 to be used in recovery of heat from exhaust gas.

It is possible to adjust the temperature of the exhaust gas immediately before passing through the catalyst bag filter with a desulfurization device or a dehydrochlorination device that may be disposed before the catalyst bag filter, or a gas temperature adjustment device. As the gas temperature adjustment device, for instance, a heat exchanger or a heater may be used. As the medium of the heat exchanger 15 for adjusting the temperature of the exhaust gas immediately before passing through the catalyst bag filter (for supplying heat to the exhaust gas), a medium discharged from the heat exchanger 10 for adjusting the temperature of the exhaust gas immediately before passing through the desulfurization device (for recovering heat from exhaust gas) may be used. The medium that transferred heat to the exhaust gas in the heat exchanger 15 may be returned to the heat exchanger 10 to be used in recovery of heat from exhaust gas.

### Reference Signs List

- 1: Catalyst bag filter
- 2: Gas cooling device
- 3: CO₂ absorption device
- 4: CO₂ recovery device
- 5: Exhaust gas source
- 6: Denitration device
- 7: Dust collection device
- 8: Desulfurization device
- 9: Dehydrochlorination device
- 10: Gas temperature adjustment device (heat exchanger for heat recovery)
- 11: Gas temperature adjustment device (heat exchanger for heat supply)
- 12: Purified exhaust gas (to stack)
- 13: Carbon dioxide
- 14: Denitration agent (ammonium, urea, etc.)
- 15: Gas temperature adjustment device (heat exchanger for heat supply)

## Claims

1. An exhaust gas purification method, comprising:
allowing exhaust gas containing at least one selected from the group consisting of soot dust, hydrogen chloride, nitrogen oxides, sulfur oxides, mercury, volatile organic compounds, and carbon oxides to pass through a catalyst bag filter which has at least one function selected from the group consisting of a denitration function, an NO oxidization function, an Hg⁰ oxidization function, a desulfurization function, and an adsorption function;
cooling the exhaust gas after passing through the catalyst bag filter to decrease a temperature of the exhaust gas; and
bringing the exhaust gas after cooling into direct contact with a CO₂ absorbent liquid to reduce carbon dioxide in the exhaust gas.

2. The exhaust gas purification method according to claim 1, further comprising:
before allowing the exhaust gas to pass through the catalyst bag filter, performing at least one process selected from the group consisting of a denitration process, a dust collection process, a desulfurization process and a dehydrochlorination process on the exhaust gas.

3. The exhaust gas purification method according to claim 1,
wherein the temperature of the exhaust gas immediately before passing through the catalyst bag filter is 80 to 250°C.

4. The exhaust gas purification method according to claim 1,
wherein the temperature of the exhaust gas immediately before directly contacting the CO₂ absorbent liquid is 20 to 80°C.

5. An exhaust gas purification apparatus, comprising:
a catalyst bag filter which has at least one function selected from the group consisting of a denitration function, an NO oxidization function, an Hg⁰ oxidization function, a desulfurization function, and an adsorption function;
a gas cooling device configured to be capable of cooling a gas to decrease a temperature of the gas; and
a CO₂ absorption device configured to be capable of reducing carbon dioxide in the gas through direct contact between the gas and a CO₂ absorbent liquid,
wherein the exhaust gas purification apparatus is configured such that the exhaust gas containing at least one selected from the group consisting of soot dust, hydrogen chloride, nitrogen oxides, sulfur oxides, mercury, volatile organic compounds, and carbon oxides is capable of passing through the catalyst bag filter, the gas cooling device, and the CO₂ absorption device in this order.

6. The exhaust gas purification apparatus according to claim 5, further comprising:
a dehydrochlorination device configured to be capable of reducing hydrogen chloride in the gas,
wherein the exhaust gas purification apparatus is configured such that the exhaust gas containing at least one selected from the group consisting of soot dust, hydrogen chloride, nitrogen oxides, sulfur oxides, mercury, volatile organic compounds, and carbon oxides is capable of passing through the dehydrochlorination device, the catalyst bag filter, the gas cooling device, and the CO₂ absorption device in this order.

7. The exhaust gas purification apparatus according to claim 5, further comprising:
a denitration device configured to be capable of reducing nitrogen oxides in the gas;
a dust collection device configured to be capable of reducing soot dust in the gas; and
a desulfurization device configured to be capable of reducing sulfur oxides in the gas,
wherein the exhaust gas purification apparatus is configured such that the exhaust gas containing at least one selected from the group consisting of soot dust, hydrogen chloride, nitrogen oxides, sulfur oxides, mercury, volatile organic compounds, and carbon oxides is capable of passing through the denitration device, the dust collection device, the desulfurization device, the catalyst bag filter, the gas cooling device, and the CO₂ absorption device in this order.

8. The exhaust gas purification apparatus according to claim 7, further comprising:
a dehydrochlorination device configured to be capable of reducing hydrogen chloride in the gas,
wherein the exhaust gas purification apparatus is configured such that the exhaust gas containing at least one selected from the group consisting of soot dust, hydrogen chloride, nitrogen oxides, sulfur oxides, mercury, volatile organic compounds, and carbon oxides is capable of passing through the denitration device, the dust collection device, the desulfurization device, the dehydrochlorination device, the catalyst bag filter, the gas cooling device, and the CO₂ absorption device in this order.
